Europäisches Patentamt

European Patent Office

Office européen des brevets

(11) Publication number: **0 250 671 B1**

(12) **EUROPEAN PATENT SPECIFICATION**

(45) Date of publication of patent specification: **15.01.92** (51) Int. Cl.5: **G01N 35/06**, G01F 23/28

(21) Application number: **86305189.2**

(22) Date of filing: **04.07.86**

(54) **Quantitative dispenser for a liquid.**

(43) Date of publication of application:
**07.01.88 Bulletin 88/01**

(45) Publication of the grant of the patent:
**15.01.92 Bulletin 92/03**

(84) Designated Contracting States:
**BE DE FR GB IT NL**

(56) References cited:
**EP-A- 0 185 330**
**CH-A- 499 096**
**DE-A- 3 113 248**
**DE-C- 871 532**

**PATENT ABSTRACTS OF JAPAN, vol. 7, no. 260 (P-237)[1405], 18th November 1983; & JP-A-58 143 269**

(73) Proprietor: **TOSOH CORPORATION**
**4560, Oaza-Tonda Shinnanyo-shi**
**Yamaguchi 746(JP)**

(72) Inventor: **Hayashi, Hidechika**
**1-19 Tokiwadai Hodogaya-ku**
**Yokohama-shi Kanagawa-ken(JP)**

(74) Representative: **Sheard, Andrew Gregory et al**
**Kilburn & Strode 30, John Street**
**London WC1N 2DD(GB)**

Rank Xerox (UK) Business Services

## Description

The present invention is directed to a quantitative dispenser for small amounts of liquid samples or reagents and more specifically to a quantitative dispenser using an optical sensing device for controlling the amount of liquid to be dispensed.

In the fields of biology and medicine, various methods of analysis have been proposed for detecting trace substances in body liquids and, in correlation with the analyses, various systems and devices have been proposed for automatic qualitative and quantitative analyses. One of the common requisites arising in these systems and devices is the strict control of the amount of liquid samples and reagents to be added to the reaction chamber and the prevention of contamination between samples. For this reason, pipettes, such as those known as micropipettes, are usually employed which are manufactured with a high degree of precision and include a disposable tip. In employing these micropipettes, the disposable tips are disposed of after each sample to avoid contamination between the samples. The sample is usually sucked into the pipette by means of a negative air pressure.

As mentioned above, strict control of the quantity of the liquid samples in reagents is necessary for minimising variations in the amounts of the samples and for obtaining reliable results, particularly in the case of immunological estimations. On the other hand, the use of disposable tips is also desirable to avoid contamination between samples since the concentration ratio of minute components can sometimes reach up to $10^4$ or even $10^6$ in the case of samples in immunological measurements of biological materials. Even when micropipettes having disposable tips are used it is still absolutely essential that the minute amounts of liquid to be dispensed must be determined with a high degree of precision and so controls are necessary for positioning the micropipettes relative to the reservoir from which the liquid samples or reagents are taken. More particularly, if a negative pressure is used for taking up the sample solution, the negative pressure can be strictly controlled when the pipette is inserted into a sample vessel. The depth to which the nozzle of the pipette is immersed in the sample solution is likely to vary depending upon the size of the sample. The variation may give rise to an error in the quantitative dispensing which cannot be ignored. The same problem also arises when the surface of the sample solution is concave due to the formation of a meniscus or the vessel itself is in a slanted position and its diameter is small.

In the past it has been proposed to install detectors to sense the level of the liquid surface in a dispensing device. However, electrode types of detector involve contamination and non-contact types of optical detector generally are not sufficiently precise, some having tolerances of several millimetres, and therefore cannot accurately operate with turbid solutions or slanted surfaces. In fact an error of several millimetres in immersion may introduce, for example, up to ten percent of dispersion when 5 µl of solution is taken with a pipette of 200 µl capacity.

Other proposals for controlling liquid levels have involved the use of optical systems but have not addressed the problem with which the present invention is concerned nor suggested the solution provided by the present invention. DE-A-3113248 does not utilize a lens system but instead uses bundles of photoconductive fibres which may be in an ordered array or a random array. The invention in this document is concerned with detecting the surface of a liquid which is liable to movement and is not as smooth as glass. It is not concerned with the problem of a tilted or curved surface. The structure shown has no means for gathering in and focussing light rays onto a point sensor so as to concentrate them and enable the point of maximum intensity to be detected even if the surface is inclined or curved.

CH-A-499096 has only a single lens system and has no means for gathering in rays reflected from an inclined or curved surface. In addition it does not focus the reflected rays onto a receiver but rather collects only a minor portion of the reflected rays, namely those on the axis of the single lens.

In addition the device of this document is not concerned with detecting the actual level of the liquid (so as to enable a nozzle to be immersed in the liquid to enable an accurate sample to be taken) but rather with detecting when a given level has been reached so that a foam destroying agent can be injected into the liquid once that level has been reached.

Accordingly since this document detects when a certain light intensity has been reached rather than when the maximum intensity has been reached the detected liquid level using the structure of CH 499096 will vary depending on the reflectivity of the liquid. With the present invention since the peak intensity is detected the actual value of the intensity does not matter and the device does not need adjustment to detect the liquid levels of liquids with different reflectivities.

Moreover CH 499096 uses a face light source rather than a point light source. Accordingly the image of the light source does not condense or focus to a definite point but gives an image similar to the light source.

In CH 499096 the optical axes for the emitted rays and the reflected rays are in common. Thus if this device was used to detect the level of liquid where the surface was curved (meniscus effect in a small container) not only will the signal intensity of the reflected light be uncertain but the position showing the maximum signal intensity will be nearer or further depending on the degree of surface curvature.

In addition if the liquid surface is inclined the light will be reflected away from the sensor and the surface of the liquid will not be accurately detected.

The concept of document DE-C-871532 is to use diffuse reflections and to cut out the mirror reflections. The structure of this document thus uses special configurations to cut out the rays giving the highest intensity and deliberately reduces the sensitivity of the detection system.

In addition the lens which controls the irradiation of the surface to be detected is supplied with a parallel beam of light rather than from a point source. The lens on which diffuse rays impinge does not focus them onto a point detector.

It is an object of the present invention to provide a new and improved quantitative dispenser for a liquid which is capable of dispensing a precisely controlled amount of liquid when a minute amount of liquid is to be taken up.

It is a further object of the present invention to provide such a dispenser which is suitable for use in an automatic analyser, particularly to the portion of an automatic analyser for estimating immunological reactions.

According to the present invention, there is provided a quantitative dispenser for a liquid comprising a pipette having a downwardly directed nozzle adapted to pick up and deliver a predetermined quantity of the liquid, means for moving the pipette downwards to immerse the lower end of the nozzle in the liquid, a liquid level sensor for determining the position of the liquid surface and a control system for determining the stopping point for the downward movement of the pipette, characterised in that the liquid level sensor comprises a lens system, a point light source arranged to direct a beam of light through the lens system onto the surface of the liquid, and a point light sensor for receiving light reflected from the surface of the liquid through the lens system, the control system being operatively connected to the point light sensor and to the means for moving the pipette for stopping the downward movement of the pipette at a position corresponding to that where a maximum intensity of the reflected light is detected by the point light sensor, the lens system comprising first and second lens placed side by side, the first lens being supplied with light from the point light source and the second lens detecting light with the point light sensor, the optical axes of the two lens being inclined with respect to each other and meeting at a crossing point, the said point being coincident with the focal point of the first lens and with the focal point of the second lens whereby light from the point light source reflected from the surface of the liquid will be detected by the point light sensor, when the surface of the liquid is at the said focal point.

Preferably, the dispenser includes means connecting the pipette and the sensor together for simultaneous downward movement towards the liquid. Alternatively, the sensor may be mounted separately from the pipette and separate means are provided for moving the sensor and the pipette independently.

Thus, the mechanism for moving the pipette downwardly may comprise a support frame on which the indication device of the pipette is supported for movement in the vertical direction and means for moving the frame up and down such as a pulse motor operating through an intermediate cam mechanism. The spot type reflection sensor to be used in the present invention may be comprised of a light emitting portion and a light receiving portion in which the light from the light source and reflected light are transmitted through a convergent optical element such as a convex lens.

Preferably the sensor includes a housing in which the lens system, the photosensor, and the light source are located. The portions may be either assembled in a unitary body or arranged separately in appropriate positions relative to each other. The maximum intensity point of the reflected light detected by the reflection type sensor can be detected by converting the reflected light into an electrical signal and by detecting the high peak of the electrical signal.

When such a sensor is used, the maximum intensity of the incoming reflected light occurs when the surface of the liquid coincides with the focus point of the light irrespective of a slanted surface or the turbidity of the liquid. The stop point of the downwardly moving pipette as determined by the maximum intensity makes it possible to control precisely the depth to which the nozzle of the pipette is immersed in the liquid.

Generally, the present invention is suitable to those devices for analysis and measurement in which the quantitative dispensing of 1000 $\mu$l or less of a liquid is required. More particularly the dispenser according to the present invention is suitable in carrying out estimations in immunological and biochemical reactions where a very small amount of a liquid, of the order of 100 $\mu$l or less, is quantitatively dispensed. The liquid dispensed may be a sample or a reagent.

The mechanism for lowering the sensor to approach the surface may be installed on the support frame supporting the pipette lowering mechanism or installed on a separate support frame independently from the pipette supporting frame. It is preferred that the point at which the sensor detects the liquid surface is horizontally as close as possible to the point where the lower end of the nozzle is partially immersed in the liquid to obtain a high degree of precision in the dispensing of the liquid.

According to another aspect of the present invention, there is provided a method for quantitatively dispensing a liquid in which a pipette having a nozzle is moved downwards to immerse the lower end of the nozzle in the liquid, the downward movement is stopped by position sensor and a control system, the liquid sample is taken up, the pipette is withdrawn, and the sample is dispensed, characterised in that the downward movement is stopped by directing a beam of light on to the liquid surface via a lens system, detecting the reflected light from the surface via the lens system with a photosensor, and stopping the downward movement of the pipette at a position corresponding to that where a maximum intensity of the reflected light is detected by the photosensor.

Preferably, the position sensor and the pipette are moved downwards simultaneously. In an alternative preferred embodiment, the sensor is moved downwards, the position of maximum intensity of reflected light is recorded in a memory, and the pipette is subsequently lowered to the desired position, in dependence upon the position recorded in the memory.

By employing the techniques of the present invention, the quantitative dispensing of a minute volume of liquid can be performed with an extremely high degree of precision. As a result, various quantitative and qualitative analyses can be accurately and precisely controlled. It will be clear that a device according to the present invention can be applied to a number of automatic analytical systems and analysers.

The invention may be carried into practice in various ways and some will now be described by way of example with reference to the accompanying drawings, in which:

Figure 1(a) is a schematic diagram showing a first embodiment of a quantitative liquid dispenser according to the present invention with the pipette disposed above a liquid reservoir;

Figure 1(b) is a partial view of the dispenser shown in Figure 1(a) with the tip of the pipette immersed in a liquid;

Figure 2(a) is a graph showing light intensity curves;

Figure 2(b) is a schematic diagram showing the relationship of an optical sensor according to the present invention relative to various points on a light intensity curve where the liquid is level;

Figure 2(c) is a view similar to Figure 2(b) showing the relationship of the optical sensor relative to a slanted surface;

Figure 3 is a partial perspective view of the apparatus for movably supporting a pipette and optical sensor for movement relative to a liquid reservoir;

Figure 4(a) is a detailed sectional view of an optical detector according to the present invention;

Figure 4(b) is a slanted and partially cross-sectional view of the optical element in Figure 4-(a);

Figure 5 is a schematic circuit diagram for detecting the maximum light intensity detected by the optical sensor.

Figure 6 is a flow chart for a process carried out with the apparatus according to the present invention;

Figure 7 is a partial perspective view of a further embodiment of the apparatus for movably supporting a pipette and optical sensor, separate from each other; and

Figure 8 is a flow chart showing the operational sequence for the apparatus shown in Figure 7.

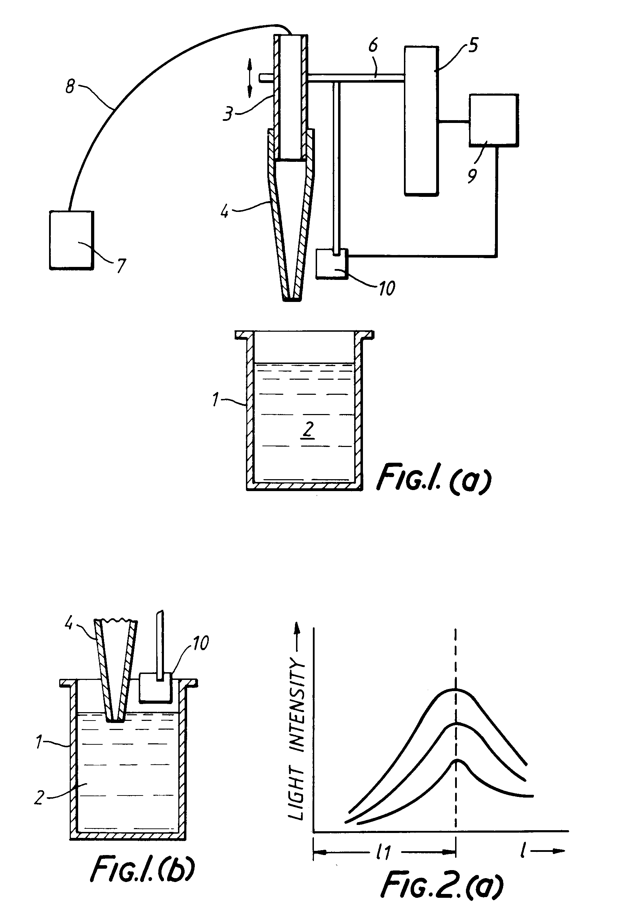

The quantitative liquid dispenser as shown in Figure 1 comprises of a pipette 3 having a disposable tip 4 which is adapted to be moved into and out of a liquid sample contained in a sample vessel 1. The pipette 3 is carried by a supporting rod or frame 6 which in turn is moved vertically by means of a drive mechanism 5 including a pulse motor under the control of a drive control circuit 9. A spot type reflection sensor 10 is also firmly supported by the support rod or frame 6 for movement with the pipette. The sensor 10 is located slightly higher than the lower end of the disposable tip 4 and an electrical signal from the sensor 10 is supplied to the control circuit 9 for controlling the drive mechanism 5.

When the pipette 3 is positioned above the liquid sample 2, the pipette 3 may be lowered from the position shown in Figure 1(a) to the position shown in Figure 1(b) in which the lower end of the disposable tip 4 is immersed in the liquid to a degree determined by the optical sensor 10. With the lower end of the disposable tip 4 immersed in the liquid 2 as shown in Figure 1(b), a predetermined amount of liquid is drawn up into the pipette by means of a negative pressure applied to the pipette 3 through a tube 8 under the control of a liquid volume controller 7. The pipette 3 is then raised to the position shown in Figure 1(a) and the liquid therein may be subsequently dispensed by application of a positive air pressure through the tube 8 to the pipette 3 under the control of the liquid volume controller 7.

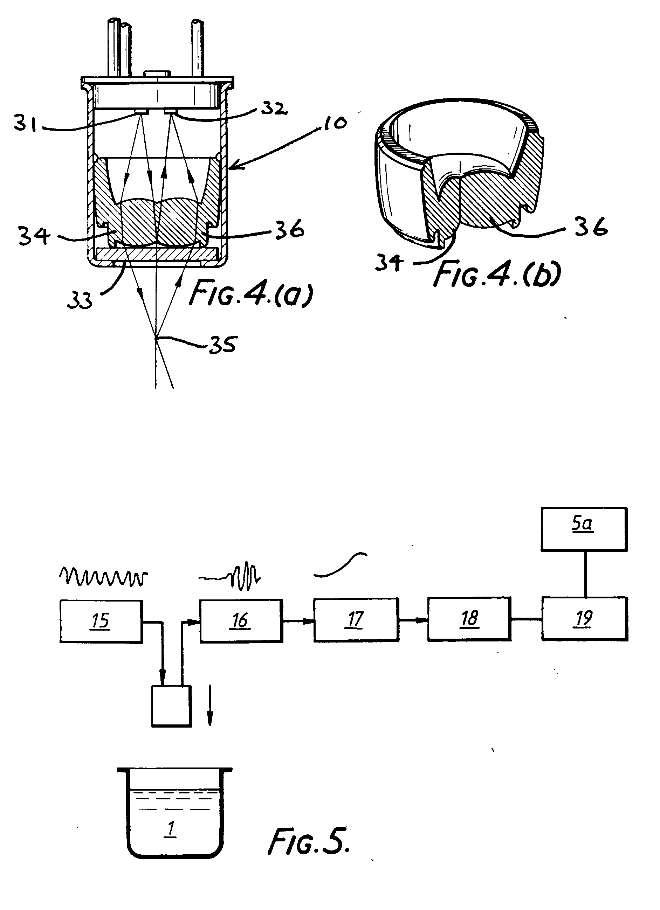

The sensor 10 can be constructed, for example with an optical reflective sensor HEDS-1000 (Yokokawa Hewlett Packard Corp). Such a spot type reflection sensor 10 emits light to the surface of the liquid 2 in the sample vessel 1 in which the lower end of the nozzle tube 4 is to be immersed and receives light reflected from the surface of the liquid. The intensity of the reflected light reaches a maximum when the sensor 10 reaches a point above the surface equal to the focal distance of the lens within the detector, the focal distance being preset by selecting an appropriate convex lens such as that shown in Figure 4(b).

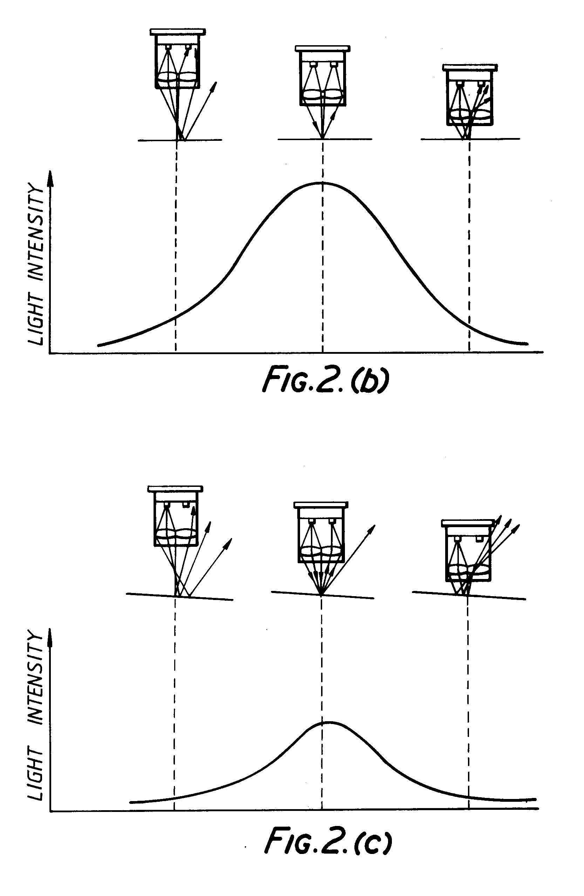

The plot diagram of several light intensity curves shown in Figure 2(a) illustrates the relationship of the light intensity relative to the distance 1 of the detector above the surface of the liquid. The distance $l_1$ from the surface of the liquid where the maximum intensity is obtained is constant as shown in Figures 2(a) regardless of the reflectivity of the liquid surface or the degree of concavity or slanting of the surface. Thus the depth of immersion of the nozzle tip into the liquid can be controlled with a high degree of accuracy.

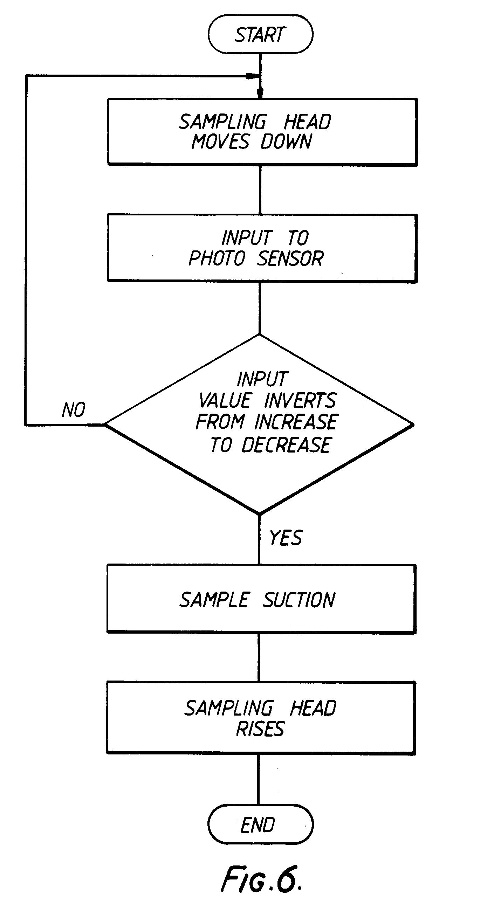

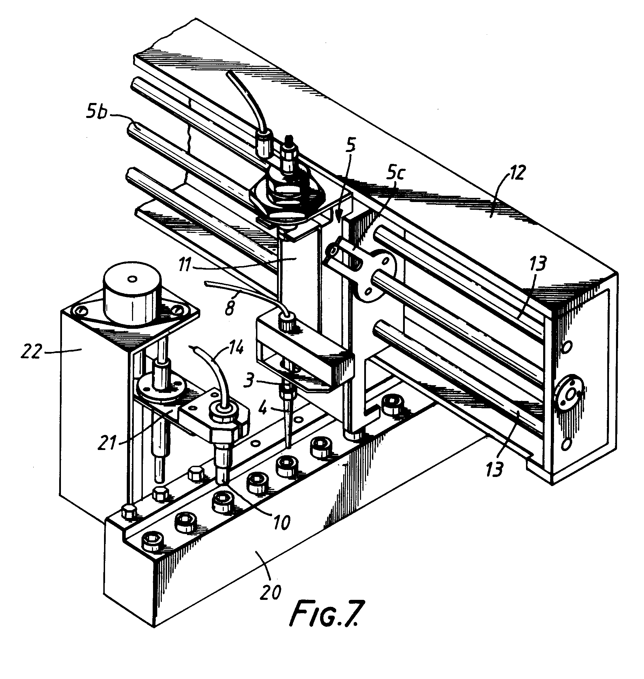

The maximum intensity of the light can be detected by using a high-peak detecting circuit such as that shown in Figure 5 so that the downward movement of the pipette is stopped when the maximum value is detected or when the pipette moves a very short distance past the point of maximum intensity.

Figure 2(b) shows three representative positions of a light detector relative to a flat liquid surface with respect to three different portions of a light intensity curve such as that shown in Figure 2-(a). The focal point of the lens in the middle position is coincident with the surface of the liquid and the light intensity is at a maximum. Figure 2(c) is similar but in this case the surface of the liquid is concave or inclined. The overall intensity of the reflected light will be less in such a situation than with a flat surface as in Figure 2(b) but the light intensity will still be at a maximum when the focal point of the lens is coincident with the surface of the liquid. When the maximum or peak value of the light intensity is expressed as 100, the light intensity detected with 0.2 mm deviation from the focal length representing the maximum or peak value may be lowered about ten percent.

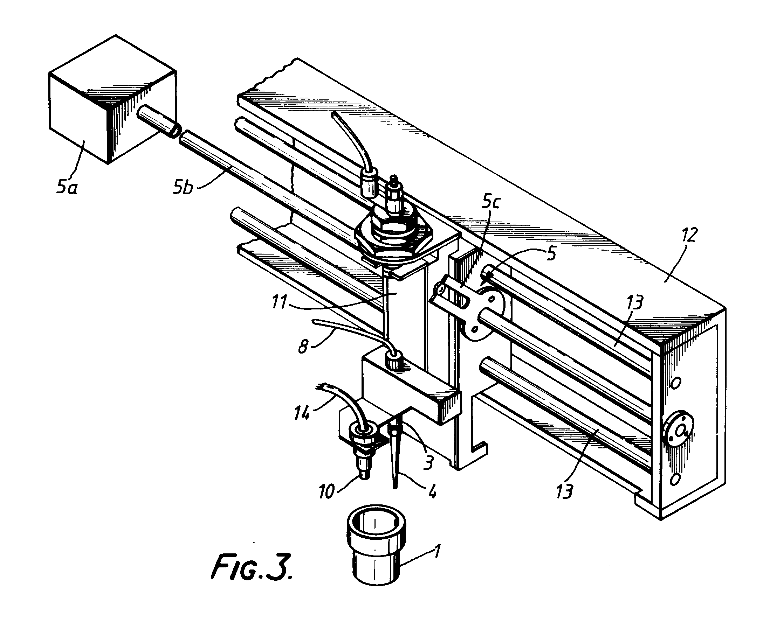

Figure 3 shows one embodiment of an apparatus suitable for carrying out the present invention which corresponds to the schematic arrangement shown in Figure 1. In Figure 3 the numerical references 1, 3, 4, 8 and 10, represent the same elements as shown in Figure 1. For moving the pipette up and down, a rotating shaft 5b is rotated by means of a pulse motor 5a to rotate a cam 5c by an amount corresponding to the amount of rotation of the pulse motor so that a frame 11 supporting the pipette 3 is moved downwards. In this way the disposable nozzle 4 detachably connected to the lower end of the pipette 3 is moved downwards by a corresponding amount and enters the liquid within the sample vessel.

The point at which the downwardly moving nozzle stops is determined by detecting the maximum value of the intensity of the reflected light by the sensor 10 which is mounted on the same support frame 11 as the pipette 3. The detector 10 is connected to the detecting circuit and a source of power by means of a cable 14. The support frame 11 is movable horizontally along guide rods 13 carried by a main frame 12 so as to allow the pipette to be moved selectively between various vessels and reaction chambers. The support frame 11 may be moved along the guide rods 13 by any suitable means which have not been shown since such means are conventional in the art.

The photosensor 10 is shown in detail in Figure 4(a) and includes an LED light source 31 and a photodiode 32 mounted along side. The light from the LED light source is projected outwardly of the glass window 33 through the convex lens 34 whose focal point is at 35. The light reflected from the liquid surface passes through the convex lens 36 and enters the photodiode 32. The signal input and output of the sensor 10 are connected to the drive control mechanism 9 as shown in Figure 1 through the cable 14 so that the maximum value of the intensity of the light incident on the photodiode is detected. The convex lens element shown in Figure 4(b) is prepared by moulding a plastics material as one body with a skirt portion and a collar portion in such a shape as if two convex lenses are combined.

Figure 5 shows a block circuit diagram for the detection of the maximum intensity of the incident light in which an oscillator 15 supplies a signal to the detector 10 to activate the LED light source 31. The signal from the photodiode 32 is passed through an amplifier 16, a wave detector 17 and an A/D converter 18 prior to being supplied to a microcomputer 19. A suitable high peak detector can be constructed using the above components by a person having ordinary skill in the electrical arts. When the maximum value or peak of light intensity is detected by the microcomputer 19, this information is transmitted to the pulse motor 5a to stop the downward movement of the pipette 3.

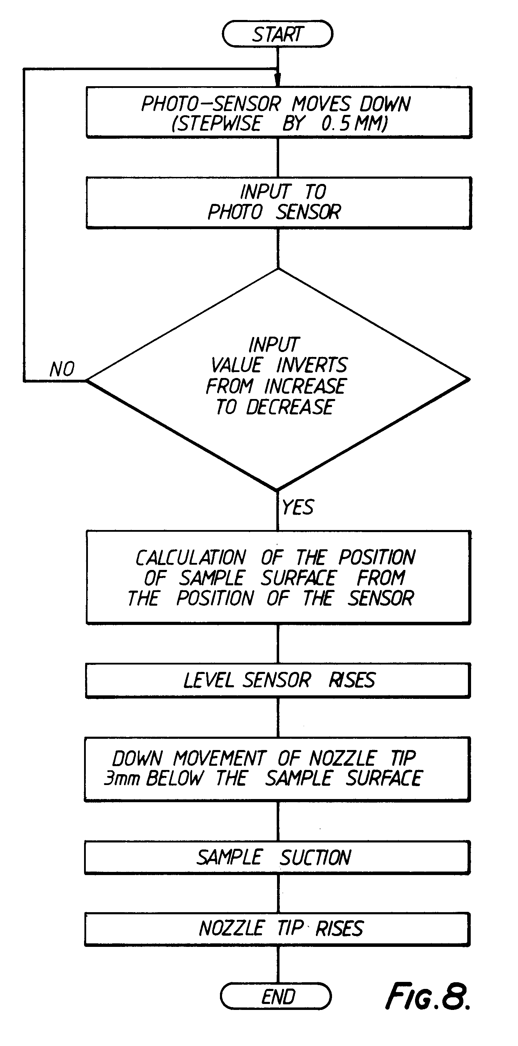

Figure 6 is a flow chart showing the operational sequence for the embodiments described above. Although the support frame 11 moves horizontally as described above the operational sequence is limited to the up and down movement of the pipette which is carried by the support frame 11. At the start of operation the sampling head moves downwards and a light signal is supplied by the photosensor as the light from the photodiode is reflected from the surface of the liquid below the sampling head. As the input value changes from an increase to a decrease the downward movement of the sampling head is stopped, a sample is withdrawn from the liquid reservoir and the sampling head subsequently rises to complete the operational cycle.

The focal length of the sensor 10 in this embodiment is 4.3 mm, and the distance from the lower end of the sensor to the lower end of the nozzle tip is 7.3 mm. In this example the nozzle and sensor are fixed to the same control mechanism as shown in Figures 1 and 3.

Figure 7 shows a further embodiment of the present invention in which, the pipette 3 and the sensor 10 are mounted separately from each other on separate support mechanisms. The detector 10 is carried by a supporting frame 21 which is mounted on a mechanism 22 for moving the frame 21 up and down. The pipette 3 is mounted for movement by means of a mechanism similar to that described above with respect to Figure 3 and the details of the movement will not be repeated. As in the previous embodiment, a downward movement of the sensor is detected and when the maximum value of reflected light intensity is detected the pulse motor for moving the pipette is controlled to limit the immersion of the tip of the pipette in the liquid. In the embodiment of Figure 7 the sample vessels are shown as being mounted in a rack 20 and suitable means may be provided for moving the pipette and detector and the rack relative to each other to align the pipette with different samples. In this embodiment, in order to determine the position at which the downward moving nozzle should be stopped, the volume of sample in a particular sample vessel is measured and memorised in a memory in the control mechanism. Then, when that sample vessel comes below the nozzle, the position at which the nozzle is stopped is determined on the basis of the memorised sample volume measurement of the vessel.

Figure 8 is a flow chart showing the operational sequence of the device of Figure 7. Firstly, the photosensor 10 is moved down towards the liquid surface of a selected sample vessel in 0.5 mm steps. When the input value to the photosensor inverts from its value increasing to its value decreasing, the position of the sample surface is calculated and stored in a memory. The sensor 10 then rises and is moved away from the selected sample, while the nozzle tip 4 is brought to the selected sample. The nozzle tip 4 is lowered until its end is 3 mm below the sample surface, using the recorded position of the surface from the memory. A sample is withdrawn by suction and the nozzle tip 4 is raised.

As an example, when the sample vessel 1 has a diameter of 11 mm and a pipette having a capacity of 200 $\mu$l is used, a liquid volume of 5 $\mu$l is picked up with the lower end of the nozzle tip being immersed to a depth of 3 mm below the surface of the liquid. When that was carried out, it was noted that the dispersion with respect to the depth of immersion of the nozzle tip was 1 mm or less and with respect to the volume of liquid picked up was two percent or less.

## Claims

1. A quantitative dispenser for a liquid comprising a pipette (3) having a downwardly directed nozzle (4) adapted to pick up and deliver a predetermined quantity of the liquid, means for moving the pipette (3) downwards to immerse the lower end of the nozzle (4) in the liquid, a liquid level sensor (10) for determining the position of the liquid surface and a control system (9) for determining the stopping point for the downward movement of the pipette (3), characterised in that the liquid level sensor (10) comprises a lens system (34,36), a point light source (31) arranged to direct a beam of light through the lens system (34) onto the surface of the liquid, and a point light sensor (32) for receiving light reflected from the surface of the liquid through the lens system (36), the control system (9) being operatively connected to the point light sensor (32) and to the means for moving the pipette (3) for stopping the downward movement of the pipette (3) at a position corresponding to that where a maximum intensity of the reflected light is detected by the point light sensor (32), the lens system comprising first and second lens placed side by side, the first lens being supplied with light from the point light source and the second lens detecting light with the point light sensor, the optical axes of the two lens being inclined with respect to each other and meeting at a crossing point, the said point being coincident with the focal point of the first lens and with the focal point of the second lens whereby light from the point light source reflected from the surface of the liquid will be detected by the point light sensor, when the surface of the liquid is at the said focal point.

2. A dispenser as claimed in any preceding claim characterised in that the sensor includes a housing in which the lens system (34,36), the point light sensor (32), and the point light source (31) are located.

3. A dispenser as claimed in any preceding claim characterised in that the lens system comprises a single lens element made up of two partial convex lenses (34,36).

4. A method for quantitatively dispensing a liquid in which a pipette (3) having a nozzle (4) is moved downwards to immerse the lower end of the nozzle (4) in the liquid, the downward movement is stopped by a liquid level sensor (10) and a control system (9), the liquid sample is taken up, the pipette (3) is withdrawn, and the sample is dispensed, characterised in that the downward movement is stopped by directing a beam of light on to the liquid surface from a point light source (31) via a first lens (34), detecting the reflected light from the surface via a second lens (36) which focuses the light onto a point light sensor (32), the first and second lens being disposed side by side, the optical axes of the two lenses being inclined with respect to each other and meeting at a crossing point, which is coincident with the focal point of the first lens and the focal point of the second lens, and stopping the downward movement of the pipette (3) at a position corresponding to that where the crossing point is positioned on the surface of the liquid and a maximum intensity of the reflected light is detected by the point-light sensor(32).

**Revendications**

1. Un distributeur quantitatif pour un liquide, comprenant une pipette (3) présentant un embout (4) dirigé vers le bas, apte à prélever et à délivrer une quantité prédéterminée du liquide, des moyens pour déplacer la pipette (3) vers le bas afin d'immerger l'extrémité inférieure de l'embout (4) dans le liquide, un détecteur de niveau du liquide (10) afin de déterminer la position de la surface du liquide et un système de contrôle (9) afin de déterminer le point d'arrêt du mouvement de descente de la pipette (3), caractérisé en ce que le détecteur de niveau du liquide (10) comprend un système de lentilles (34, 36), une source de lumière-point (31), disposée afin de diriger un rayon de lumière par le système de lentilles (34) sur la surface du liquide, et un capteur de lumière-point (32) pour recevoir de la lumière renvoyée par la surface du liquide par le système à lentilles (36), le système de contrôle (9) étant connecté de manière fonctionnelle au capteur de lumière-point (32) et aux dispositifs pour faire bouger la pipette (3), pour arrêter la descente de la pipette (3) à une position correspondant à celle où une intensité maximale de la lumière réfléchie est détectée par le capteur de lumière-point (32), le système à lentilles comprenant une première et une seconde lentille disposées côte à côte, la première lentille recevant de la lumière de la source de lumière-point et la seconde lentille détectant de la lumière avec le capteur de lumière-point, les axes optiques des deux lentilles étant inclinés l'un par rapport à l'autre et se rencontrant à un point de croisement, ledit point coïncidant avec foyer de la première lentille et avec le foyer de la seconde lentille, ce qui fait que de la lumière venant de la source de lumière-point réfléchie de la surface du liquide sera détectée par le capteur de lumière-point, lorsque la surface du liquide se trouve audit point focal.

2. Un distributeur tel que revendiqué dans une quelconque revendication précédente, caractérisé en ce que le capteur comprend un logement dans lequel se trouvent le système de lentilles (34, 36), le capteur de lumière-point (32), et la source de lumière-point (31).

3. Un distributeur tel que revendiqué dans l'une des revendications précédentes, caractérisé en ce que le systéme de lentilles comprend un unique élément de lentille constitué par deux lentilles partiellement convexes (34, 36).

4. Une méthode pour distribuer quantitativement un liquide dans lequel une pipette (3) avec un embout (4) est descendue pour immerger l'extrémité inférieure de l'embout (4) dans le liquide, le mouvement de descente est arrêté par un détecteur de niveau (10) et un système de contrôle (9), l'échantillon de liquide est prélevé, la pipette (3) est retirée, et l'échantillon est distribué, caractérisé en ce que le mouvement de descente est arrêté en dirigeant un rayon de lumière sur la surface du liquide à partir d'une source de lumière-point (31) par une première lentille (34), détectant la lumière réfléchie de la surface par une seconde lentille (36) qui concentre la lumière sur un capteur de lumière-point (32), les première et seconde lentilles étant disposées côte à côte, les axes optiques des deux lentilles étant inclinées l'une par rapport à l'autre et se rencontrant à un point de croisement, lequel coïncide avec le foyer de la première lentille et le foyer de la seconde lentille, et arrêtant le mouvement de descente de la pipette (3) à une position correspondant à celle où est situé le point de croisement sur la surface du liquide et une intensité maximum de la lumière réfléchie est détectée par le capteur de lumière-point (32).

**Patentansprüche**

1. Vorrichtung zur Abgabe von Flüssigkeitsdosen mit einer Pipette (3), die eine nach unten gerichtete Düse (4) aufweist, die geeignet ist, eine bestimmte Flüssigkeitsmenge aufzunehmen und abzugeben, eine Einrichtung zum Abwärtsbewegen der Pipette (3), so daß das untere Ende der Düse (4) in die Flüssigkeit getaucht wird, einem Flüssigkeitsspiegelsensor (10) zum Bestimmen der Position der Flüssigkeitsoberfläche und einem Steuersystem (9) zum Bestimmen der Stoppstelle für die nach unten gerichtete Bewegung der Pipette (3), **dadurch gekennzeichnet,** daß der Flüssigkeitsspiegelsensor (10) ein Linsensystem (34, 36), eine Lichtpunktquelle (31), die so angeordnet ist, daß ein Lichtstrahl durch das Linsensystem (34) auf die Flüssigkeitsoberfläche gerichtet wird, und einen Lichtpunktsensor (32) zum Empfangen von von der Flüssigkeitsoberfläche durch das Linsensystem (36) reflektiertem Licht aufweist, wobei das Steuersystem (9) wirksam mit dem Lichtpunktsensor (32) und der Einrichtung zum Bewegen der Pipette (3) verbunden ist, zum Anhalten der nach unten gerichteten Bewegung der Pipette (3) an einer Stelle, die der entspricht, an der eine maximale Intensität des reflektierten Lichts durch den Lichtpunktsensor (32) detektiert wird, wobei das Linsensystem eine erste und eine zweite nebeneinander angeordnete Linse aufweist, der ersten Linse Licht von der Lichtpunktquelle zugeführt wird und die zweite Linse Licht mit dem Lichtpunktsensor detektiert, die optischen Achsen der zwei Linsen zueinander schräg liegen und sich in einem Kreuzungspunkt treffen, der genannte Punkt mit dem Brennpunkt der ersten Linse und mit dem Brennpunkt der zweiten Linse zusammenfällt, wodurch Licht von der Lichtpunktquelle das von der Flüssigkeitsoberfläche reflektiert wird, durch den Lichtpunktsensor detektiert wird, wenn die Flüssigkeitsoberfläche in dem genannten Brennpunkt liegt.

2. Abgabevorrichtung nach einem vorangehenden Anspruch, **dadurch gekennzeichnet,** daß der Sensor ein Gehäuse aufweist, in dem das Linsensystem (34, 36), der Lichtpunktsensor (32) und die Lichtpunktquelle (31) angeordnet sind.

3. Abgabevorrichtung nach einem der vorstehenden Ansprüche, **dadurch gekennzeichnet,** daß das Linsensystem ein einzelnes Linsenelement aufweist, das aus zwei Teil-Konvexlinsen (34, 36) gebildet wird.

4. Verfahren zur Abgabe von Flüssigkeitsdosen, wobei eine Pipette (3) mit einer Düse (4) nach unten bewegt wird, so daß das untere Ende der Düse (4) in die Flüssigkeit getaucht wird, die nach unten gerichtete Bewegung mittels eines Flüssigkeitsspiegelsensors (10) und eines Steuersystems (9) gestoppt wird, die Flüssigkeitsprobe aufgenommen wird, die Pipette (3) herausgezogen wird, und die Probe abgegeben wird, **dadurch gekennzeichnet,** daß die nach unten gerichtete Bewegung gestoppt wird, indem ein Lichtstrahl von einer Lichtpunktquelle (31) über eine erste Linse (34) auf die Flüssigkeitsoberfläche gerichtet wird, das von der Oberfläche reflektierte Licht über eine zweite Linse (36), die das Licht auf einen Lichtpunktsensor (32) fokusiert, detektiert wird, wobei die erste und die zweite Linse nebeneinander angeordnet sind, die optischen Achsen der zwei Linsen zueinander schräg liegen und sich in einem Kreuzungspunkt treffen, der mit dem Brennpunkt der ersten Linse und dem Brennpunkt der zweiten Linse zusammenfällt, und die nach unten gerichtete Bewegung der Pipette (3) an einer Stelle stoppt, die der entspricht, an der der Kreuzungspunkt auf der Flüssigkeitsoberfläche angeordnet ist und eine maximale Intensität des reflektierten Lichts durch den Lichtpunktsensor (32) detektiert wird.

Fig.I.(a)

Fig.I.(b)

Fig.2.(a)

FIG.2.(b)

FIG.2.(c)

Fig.3.

FIG.4.(a)

FIG.4.(b)

FIG.5.

FIG.6.

FIG.7

```
                    ┌─────────────┐
                    │    START    │
                    └──────┬──────┘
                           │
    ┌──────────────────────┼──────────────────────┐
    │                      ▼                       │
    │      ┌──────────────────────────────┐        │
    │      │  PHOTO-SENSOR MOVES DOWN      │        │
    │      │  (STEPWISE  BY  0.5MM)        │        │
    │      └──────────────┬───────────────┘        │
    │                     │                        │
    │      ┌──────────────────────────────┐        │
    │      │       INPUT  TO              │        │
    │      │      PHOTO SENSOR            │        │
    │      └──────────────┬───────────────┘        │
    │                     │                        │
    │                  ╱──┴──╲                     │
    │          NO    ╱  INPUT  ╲                   │
    └───────────────    VALUE INVERTS   
                      ╲ FROM INCREASE ╱
                       ╲ TO DECREASE ╱
                        ╲──────┬────╱
                               │ YES
            ┌─────────────────────────────────┐
            │ CALCULATION OF THE POSITION      │
            │ OF SAMPLE SURFACE  FROM          │
            │ THE  POSITION OF THE SENSOR      │
            └────────────────┬────────────────┘
                             │
            ┌─────────────────────────────────┐
            │      LEVEL SENSOR  RISES         │
            └────────────────┬────────────────┘
                             │
            ┌─────────────────────────────────┐
            │ DOWN MOVEMENT OF NOZZLE TIP      │
            │ 3mm BELOW  THE  SAMPLE SURFACE   │
            └────────────────┬────────────────┘
                             │
            ┌─────────────────────────────────┐
            │      SAMPLE  SUCTION             │
            └────────────────┬────────────────┘
                             │
            ┌─────────────────────────────────┐
            │      NOZZLE TIP RISES            │
            └────────────────┬────────────────┘
                             │
                       ┌─────┴─────┐
                       │    END    │
                       └───────────┘
```

FIG.8.